(19) Europäisches Patentamt
European Patent Office
Office européen des brevets

(11) Veröffentlichungsnummer: **0 351 759 A2**

(12) # EUROPÄISCHE PATENTANMELDUNG

(21) Anmeldenummer: **89113086.6**

(22) Anmeldetag: **17.07.89**

(51) Int. Cl.[4]: **C08F 2/44 , C08F 230/04 , C08G 83/00**

(30) Priorität: **18.07.88 DE 3824333**

(43) Veröffentlichungstag der Anmeldung: **24.01.90 Patentblatt 90/04**

(84) Benannte Vertragsstaaten: **AT BE CH DE ES FR GB GR IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Nass, Rüdiger, Dr.**
**Brückenstrasse 6**
**D-8705 Zellingen(DE)**
Erfinder: **Schmidt, Helmut, Dr.**
**Am Schlosssand 9**
**D-8705 Zellingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**D-8000 München 40(DE)**

(54) **Verfahren zur Fixierung einer anorganischen Spezies in einer organischen Matrix.**

(57) Es wird ein Verfahren zur Fixierung einer anorganischen Spezies in einer organischen Matrix beschrieben, das dadurch gekennzeichnet ist, daß man eine Verbindung der Formel $MR_n$, in welcher M ausgewählt ist aus Nebengruppenmetallen, Lanthaniden, Actiniden, Al, Sn, B, Si und sich die Reste R durch einen Komplexbildner verdrängen lassen, mit einem Komplexbildner in Kontakt bringt, wobei der Komplexbildner über eine funktionelle Gruppe verfügt, die an einer Polymerisations- oder Polykondensationsreaktion teilnehmen kann. Nach der Komplexbildung wird vorzugsweise zunächst eine Hydrolyse und Kondensation durchgeführt, woran sich eine Polymerisation oder Polykondensation anschließt.

EP 0 351 759 A2

# VERFAHREN ZUR FIXIERUNG EINER ANORGANISCHEN SPEZIES IN EINER ORGANISCHEN MATRIX

Die vorliegende Erfindung betrifft ein Verfahren zur Fixierung einer anorganisch Spezies in einer organischen Matrix, insbesondere die homogene Einbettung von anorganischen Polykondensaten in eine organische Polymermatrix.

Kunststoffe haben in den letzten Jahrzehnten herkömmliche Werkstoffe wie Metall, Holz, Glas, Naturfaser usw. auf vielen Gebieten immer mehr verdrängt. Mit der zunehmenden Verbreitung und Verwendung der Kunststoffe sind aber auch die Anforderungen hinsichtlich ihrer Eigenschaften gestiegen. Dies trifft sowohl auf das Verhalten der Kunststoffe bei der Verarbeitung als auch bei der späteren Verwendung zu. Ein wesentlicher Aspekt bei der Beurteilung der Brauchbarkeit eines Kunststoffs ist seine Festigkeit, z.B. seine Bruchfestigkeit, Reißfestigkeit, Schlagzähigkeit usw. Man hat deshalb schon die unterschiedlichsten Maßnahmen ergriffen, um einem vorgegebenen Kunststoff die gewünschten Eigenschaften zu verleihen. Einer dieser Wege besteht z.B. darin, dem Kunststoff verstärkende Fasern organischer und vor allem anorganischer Natur, wie z.B. Glasfasern, einzuverleiben und die organische Polymermatrix dadurch mit einem Stützgerüst zu versehen. Bei der Verstärkung mit Fasern hat sich herausgestellt, daß die Resultate umso besser sind, je kleiner die Dimensionen dieser Fasern sind. Es ist aber nicht oder zumindest nur mit unvertretbar großem Aufwand möglich, Fasern herzustellen, die beliebig kleine Dimensionen aufweisen.

Weiter ist auch bekannt, daß der verstärkende Effekt der Fasern umso größer ist, je besser verträglich sie mit der Polymermatrix sind, d.h. je fester sie darin verankert werden können. Auch hier treten in der Regel Probleme auf, da z.B. anorganische Fasern (Glasfasern) und organische Polymere hinsichtlich ihrer Beschaffenheit so unterschiedlich sind, daß daraus, wenn überhaupt, nur eine schwache Wechselwirkung zwischen Faser und Matrix resultiert. In der Regel muß deshalb versucht werden, die Oberfläche der Fasern so zu verändern, daß darauf Verankerungsstellen für die Polymermatrix geschaffen werden. Dieses Verfahren ist umständlich aber trotzdem nicht immer von dem gewünschten Erfolg gekrönt.

Ein drittes Problem bei der Verstärkung von Kunststoffen mit Fasern besteht darin, daß die Fasern möglichst gleichmäßig in der Polymermatrix verteilt sein müssen, um zu gewährleisten, daß die Festigkeitseigenschaften eines daraus hergestellten Gegenstandes an allen Stellen gleich sind, d.h. keine durch eine unterdurchschnittliche Anwesenheit von Fasern bedingten Schwachstellen vorhanden sind. Auch diese homogene Verteilung der Fasern in der Matrix läßt sich in der Regel nicht ohne weiteres verwirklichen, insbesondere bedingt durch eine meistens bereits relativ hohe Viskosität der zur Herstellung der organischen Matrix benötigten Ausgangsmaterialien.

Der vorliegenden Erfindung liegt deshalb die Aufgabe zugrunde, ein Verfahren zur Verfügung zu stellen, das es ermöglicht, die obigen Probleme zu umgehen, wobei das Verfahren nicht auf die Einverleibung von Fasern in eine organische Matrix beschränkt ist, sondern es ganz allgemein ermöglichen soll, eine anorganische Spezies homogen in einer organischen Matrix zu verteilen und sie fest darin zu verankern.

Diese Aufgabe wird erfindungsgemäß gelöst durch ein Verfahren, das dadurch gekennzeichnet ist, daß man mindestens einer Verbindung der Summenformel (I)

$MR_n$ (I)

in welcher M ausgewählt ist aus Nebengruppenmetallen, Lanthaniden, Actiniden, Al, Sn, B und Si; sich wenigstens ein Teil der Reste R, die gleich oder verschieden sein können, durch einen Komplexbildner verdrängen läßt; und n der Quotient aus der Wertigkeit von M und der durchschnittlichen Wertigkeit der Reste R ist;

gegebenenfalls in teilweise hydrolysierter bzw. vorkondensierter Form mit mindestens einer organischen Verbindung A in Kontakt bringt, die über mindestens eine zur Komplexbildung mit M fähige funktionelle Gruppe X, die wenigstens einen Teil der Reste R verdrängen kann, verfügt und zusätzlich mindestens eine funktionelle Gruppe Y, die an einer Polymerisations- oder Polykondensationsreaktion teilnehmen kann, aufweist, und man nach erfolgter Komplexbildung eine Polymerisation oder Polykondensation unter Beteiligung der funktionellen Gruppe(n) Y der Verbindung A durchführt.

Gemäß einer bevorzugten Ausführungsform des erfindungsgemäßen Verfahrens stehen die Zentralatome M der Verbindungen der Summenformel (I) in der organischen Matrix über Sauerstoffbrücken miteinander in Verbindung, wobei durch die geeignete Wahl des molaren Verhältnisses von Verbindungen der Formel (I) zu Verbindungen A der Vernetzungsgrad, d.h. die Zahl der mit einem bestimmten Zentralatom über Sauerstoffbrücken verbundenen anderen Zentralatome eingestellt wird. So bedeutet z.B. ein Vernetzungsgrad von 2, daß sich eine lineare Struktur, d.h. eine Faserstruktur ausbildet, während z.B. bei einem Vernetzungsgrad von 3 ein dreidimensionales Netzwerk entsteht. Selbstverständlich können auch Vernetzungsgrade eingestellt werden, die z.B. zwischen 2 und 3 liegen.

Zur Erzielung eines Vernetzungsgrades, der von 0 verschieden ist, setzt man die Verbindung A in einem solchen molaren Verhältnis, bezogen auf die Verbindung der Formel (I) ein, daß die Zahl der theoretisch verdrängbaren Reste R größer ist als die Zahl der durch die Gruppen X theoretisch ersetzbaren Reste. Die nach der Komplexbildung noch an M verbliebenen Reste R sind vorzugsweise solche, die hydrolytisch instabil sind, d.h. sich durch Umsetzung mit Wasser durch OH-Gruppen ersetzen lassen. Die Zugabe von Wasser erfolgt dabei vorzugsweise so, daß sich an die Hydrolyse, d.h. den Austausch der Reste R durch OH-Gruppen, eine Kondensation dieser OH-Gruppen unter Wasserabspaltung anschließt, was z.B. durch Zugabe geeigneter Katalysatoren oder durch Temperaturerhöhung bewerkstelligt werden kann.

Als Ausgangsverbindungen der Formel (I) werden erfindungsgemäß solche bevorzugt, deren Zentralatom M ausgewählt ist aus Aluminium, Vanadium, Titan, Zirkonium, Hafnium, Zinn, Uran, Bor und Silicium, wobei Aluminium, Titan und Zirkonium besonders bevorzugt sind. Selbstverständlich können auch mehrere Verbindungen der Formel (I) gleichzeitig eingesetzt werden. Dabei können diese Verbindungen die gleichen oder voneinander verschiedene Zentralatome aufweisen. Besonders bevorzugt ist es, wenn die Zahl der voneinander verschiedenen Zentralatome 3 und insbesondere 2 nicht übersteigt.

Die Reste R in den Verbindungen der Formel (I) sind zumindest zum Teil und vorzugsweise alle so beschaffen, daß sie sich sowohl von der funktionellen Gruppe X der Verbindung A als auch von Wasser verdrängen lassen. Diese Eigenschaft ist dem Rest R nicht inhärent, sondern ist vom jeweiligen Zentralatom M abhängig, so daß keine allgemein gültigen Beispiele für derartige Reste R gegeben werden können. Vorzugsweise werden die Reste R aber so ausgewählt, daß sie die oben genannten Bedingungen erfüllen und gleichzeitig relativ einfach aufgebaut sind, was insbesondere auch vom wirtschaftlichen Standpunkt aus vernünftig ist, da diese Reste ohnehin später verdrängt werden sollen und dann praktisch ein Abfallprodukt darstellen, das vorzugsweise im Endprodukt nicht mehr vorhanden ist.

Beispiele für derartige Reste sind Halogen-, Alkyl-, Alkoxy- und Acyloxygruppen, obwohl erfindungsgemäß auch Gruppen mit komplexerer Struktur eingesetzt werden können, wie z.B. Kohlenwasserstoffreste, verzweigt oder unverzweigt, die durch Substituenten, wie z.B. Halogen, Alkoxy, Nitro und Dialkylamino substituiert sein können. Diese Gruppen können als solche oder z.B. über ein Sauerstoffatom, ein Stickstoffatom, eine Carbonylgruppe oder eine Oxycarbonylgruppe an das Zentralatom M gebunden sein.

Besonders bevorzugte Reste R in der obigen Formel (I) sind, jeweils abhängig vom Zentralatom M, Halogenatome (Fluor, Chlor, Brom und Jod, insbesondere Chlor und Brom); Alkylgruppen mit 1 bis 8, vorzugsweise 1 bis 4 Kohlenstoffatomen, z.B. Methyl, Ethyl, n-Propyl, i-Propyl, n-Butyl, i-Butyl und sek.-Butyl; Alkoxygruppen mit 1 bis 8 vorzugsweise 1 bis 4 Kohlenstoffatomen, z.B. Methoxy, Ethoxy, i-Propoxy, n-Propoxy, n-Butoxy, i-Butoxy, sek.-Butoxy, Pentoxy und 2-Ethylhexyloxy; und Acyloxyreste mit 2 bis 8, vorzugsweise 2 bis 4 Kohlenstoffatomen, z.B. Acetoxy. Unter diesen Resten sind die obigen Alkoxygruppen die am meisten bevorzugten.

Wie bereits oben erwähnt, sind Verbindungen von Aluminium, Titan und Zirkonium im erfindungsgemäßen Verfahren besonders bevorzugt, insbesondere dann, wenn in der obigen Formel (I) die 3 bzw. 4 Reste R identisch sind und/oder für Alkoxyreste mit 1 bis 4 Kohlenstoffatomen stehen.

Selbstverständlich ist es auch möglich, bereits teilhydrolysierte bzw. teilkondensierte Ausgangsverbindungen der Formel (I) einzusetzen, so lange sich diese noch im nennenswerten Umfang im vorzugsweise verwendeten Lösungsmittel lösen. Die Teilhydrolysate bzw. Teilkondensate können sich auch von Verbindungen mit unterschiedlichen Zentralatomen M ableiten. Bevorzugt werden jedoch monomere, d.h. noch nicht vorkondensierte Ausgangsverbindungen der Formel $MR_n$ eingesetzt.

Außerdem kann es wünschenswert sein, eine kleine Menge einer gegebenenfalls hydrolysierbaren Verbindung eines anderen Elements, z.B. Calcium, Magnesium und Barium zuzugeben.

Konkrete Beispiele für erfindungsgemäß besonders bevorzugte Verbindungen $MR_n$ sind:
$AlCl_3$, $Al(OC_2H_5)_3$, $Al(OC_3H_7)_3$, Al(O-i-$C_3H_7)_3$, Al(O-sek.-$C_4H_9)_3$; $TiCl_4$, $Ti(OC_2H_5)_4$, $Ti(OC_3H_7)_4$, Ti(O-i-$C_3H_7)_4$, $Ti(OC_4H_9)_4$, Ti(2-ethylhexoxy)$_4$; $ZrCl_4$, $Zr(OC_2H_5)_4$, $Zr(OC_3H_7)_4$, Zr(O-i-$C_3H_7)_4$, $Zr(OC_4H_9)_4$, $ZrOCl_2$, Zr(2-ethylhexoxy)$_4$; $VOCl_3$, $V(OC_2H_5)_3$, $VO(OC_2H_5)_3$; $SnCl_4$; $B(OCH_3)_3$, $B(OC_2H_5)_3$; $SiCl_4$, $Si(OCH_3)_4$, $Si(OC_2H_5)_4$, $Si(OC_3H_7)_4$.

Als organische Verbindung A ist erfindungsgemäß jede Verbindung geeignet, die über mindestens eine zur Komplexbildung mit M fähige funtionelle Gruppe X, die wenigstens einen Teil der Reste R verdrängen kann, verfügt und zusätzlich mindestens eine funktionelle Gruppe Y, die an einer Polymerisations- oder Polykondensationsreaktion teilnehmen kann, aufweist. Außerdem sollte die Verbindung A vorzugsweise in dem verwendeten Lösungsmittel löslich sein und mit M einen im Lösungsmittel löslichen Komplex bilden. Als organische Verbindungen werden hier solche verstanden, die über ein kohlenstoffhaltiges Grundgerüst verfügen, wobei neben Kohlenstoff insbesondere noch H, O, S und/oder N darin vorhanden sein

können.

Als zur Komplexbildung mit M fähige funktionelle Gruppen X kommen prinzipiell alle Gruppen in Frage, die die oben genannten Bedingungen erfüllen. Dies sind in der Regel Gruppen, die über mindestens zwei Atome mit freien Elektronenpaaren, insbesondere Sauerstoff, Stickstoff und Schwefel, verfügen und sich über diese Elektronenpaare an das Zentralatom M koordinieren. Erfindungsgemäß werden funktionelle Gruppen, die sich über Sauerstoffatome an das Zentralatom koordinieren, besonders bevorzugt. Beispiele hierfür sind Carboxylgruppen (COOH bzw. $COO^-$) und ß-Dicarbonyl-Strukturelemente (insbesondere $-CO-CH_2-CO-$). Auch Alkanolamin-Strukturelemente können sich als vorteilhafte Gruppe X erweisen.

Es ist selbstverständlich, daß die Wahl der funktionellen Gruppe X in einem gewissen Maße auch von der Natur des Zentralatoms M abhängt, da z.B. nicht alle Gruppen X die für die Größe des Zentralatoms M optimale Geometrie aufweisen. Die für eine gegebene Verbindung der Formel (I) am besten geeignete funktionelle Gruppe X kann jedoch anhand einfacher Versuche bestimmt werden.

Die funktionelle Gruppe Y, die in der Verbindung A ebenfalls anwesend sein muß, ist so beschaffen, daß sie an einer Reaktion teilnehmen kann, die zur Ausbildung einer oligomeren bzw. polymeren organischen Kette führt. Derartige Reaktionen sind in der Regel Polymerisations-oder Polykondensationsreaktionen (bzw. Polyadduktbildungen). Bevorzugt werden funktionelle Gruppen Y, die an einer Polymerisationsreaktion, insbesondere einer radikalischen Polymerisation, teilnehmen können. Demgemäß ist die funktionelle Gruppe Y bevorzugt eine ethylenisch (bzw. acetylenisch) ungesättigte Gruppierung, insbesondere eine Gruppe $CH_2=CZ-$, wobei Z für H oder $CH_3$ steht.

Die funktionellen Gruppen X und Y können in der Verbindung A entweder direkt miteinander verbunden oder durch ein Strukturelement B, z.B. eine Alkylengruppe, getrennt sein. Die Verbindung A kann erfindungsgemäß auch mehr als eine funktionelle Gruppe X und/oder Y enthalten. Beispiele hierfür sind z.B. Malon- bzw. Fumarsäure mit zwei funktionellen Gruppen X und einer funktionellen Gruppe Y. Erfindungsgemäß bevorzugt werden jedoch Verbindungen A, die jeweils nur eine Gruppe X und Y aufweisen.

Die beste Wahl für eine Verbindung A hängt von einer Reihe von Faktoren ab, wie z.B. der Natur der Verbindung der Formel (I), dem verwendeten Lösungsmittel, der beabsichtigten Verwendung des Endprodukts etc. Gegebenenfalls ist auch die Zugänglichkeit der Verbindung A in Betracht zu ziehen.

Beispiele für im Handel erhältliche oder leicht herstellbare Verbindungen A sind die folgenden: Acrylsäure, Methacrylsäure, Acetessigsäureallylester, Acetessigsäurevinylester, 5-Hexen-2,4-dion und 5-Methyl-5-hexen-2,4-dion.

Die Verbindung A kann zusätzlich zu den funktionellen Gruppen X und Y auch über andere funktionelle Gruppen verfügen, die nur so beschaffen sein müssen, daß sie die Komplexbildung bzw. die Polymerisation oder Polykondensation nicht im merklichen Maße beeinträchtigen. Auch muß die Verbindung A nicht notwendigerweise rein organischer Natur sein, sondern sie kann unter den soeben genannten Voraussetzungen auch anorganische Reste, z.B. Silylgruppen, tragen.

Vorzugsweise wird das Kontaktieren der Verbindung der Formel (I) mit der Verbindung A in einem organischen Lösungsmittel durchgeführt. Das Lösungsmittel soll die Ausgangs- und Endprodukte in zufriedenstellendem Maße lösen und muß so beschaffen sein, daß es die Komplexbildung und gegebenenfalls die Umsetzung mit Wasser nicht be-oder gar verhindert. Insbesondere sollte es nicht mit den darin gelösten Komponenten reagieren. Als zu diesem Zweck besonders geeignet haben sich polare organische Lösungsmittel erwiesen, obwohl auch unpolare Lösungsmittel oder Gemische von polaren und unpolaren Lösungsmitteln eingesetzt werden können. Besonders bevorzugt werden Alkohole, insbesondere Methanol, Ethanol, n-Propanol, i-Propanol, Butanol und Gemische derselben. Weitere erfindungsgemäß verwendbare Lösungsmittel sind z.B. Methylenchlorid, Chloroform, Tetrachlorkohlenstoff, Ether, z.B. Diethylether und Tetrahydrofuran, Ketone, z.B. Aceton und Butanon, Ester, z.B. Ethylacetat, Pentan, Hexan, Cyclohexan, Benzol, Toluol und Gemische dieser Lösungsmittel.

Das erfindungsgemäße Verfahren kann in einfacher Weise ausgeführt werden, indem man zunächst die Ausgangsverbindungen (Verbindungen der Formel (I) und Verbindungen A) im gewählten Lösungsmittel bzw. Lösungsmittelgemisch im vorbestimmtem molaren Verhältnis löst. Der gewünschte Komplex kann in bestimmten Fällen auch so hergestellt werden, daß man statt der reinen Ausgangsverbindungen eine bereits stark mit Verbindung A vorkomplexierte Verbindung der Formel (I) neben einer noch nicht vorkomplexierten Verbindung der Formel (I) einsetzt und sich die Spezies mit dem eigentlich gewünschten Komplexierungsverhältnis dann durch Ligandenaustauschreaktionen in der Lösung bilden.

Nachdem in der Lösung der gewünschte Komplex vorliegt, kann dieser in geeigneter Weise, z.B. durch Abziehen des Lösungsmittels, isoliert werden und zwecks Durchführung der Polymerisations- bzw. Polykondensationsreaktion im gleichen oder einem anderen Lösungsmittel erneut gelöst werden. Aus praktischen Gründen wird es jedoch bevorzugt, die Polymerisation bzw. Polykondensation

im für die Komplexbildung verwendeten Lösungsmittel ohne Isolierung der Komplexverbindung durchzuführen.

Gemäß einer bevorzugten Ausführungsform der vorliegenden Erfindung werden vor der Einleitung der Polymerisation bzw. der Polykondensation die einzelnen Zentralatome M noch über Sauerstoffbrücken zu einem zwei- bzw. dreidimensionalen Gerüst verbunden. Dies geschieht vorzugsweise, indem man der die Komplexverbindung enthaltenden Lösung Wasser zusetzt. Vorzugsweise handelt es sich bei der Wassermenge um eine stöchiometrische, d.h. um diejenige Menge Wasser, die theoretisch benötigt wird, um alle nach der Komplexbildung noch am Zentralatom M befindlichen, hydrolytisch instabilen Reste R durch OH zu ersetzen. Vorzugsweise sind alle noch an M befindlichen Reste R hydrolytisch abspaltbar. Selbstverständlich kann auch eine unterstöchiometrische Wassermenge eingesetzt werden, wodurch nur ein Teil der noch vorhandenen Reste R durch OH ersetzt wird. Auch ein Wasserüberschuß kann verwendet werden, obwohl dies nicht sinnvoll ist und deshalb auch nicht bevorzugt wird.

Die Art der Wasserzugabe, die wie die Komplexbildung gewöhnlich zwischen 0 und 40° C, vorzugsweise bei Raumtemperatur erfolgt, hängt von der Natur und insbesondere der Reaktivität der im Lösungsmittel gelösten Komplexverbindung und somit letztendlich von der Natur des Zentralatoms M und der Zahl der daran koordinierten Gruppen X ab. In der Regel kann das Wasser in einer Portion zur Komplex-Lösung gegeben werden. Die Komplexierung des Zentralatoms M im erfindungsgemäßen Verfahren hat nämlich den zusätzlichen Vorteil, daß auch im Falle der gegenüber Wasser normalerweise hochreaktiven Verbindungen (z.B. Verbindungen von Aluminium, Titan oder Zirkon) die gebildeten Hydroxide (bzw. nach der Kondensation Oxide) nicht aus der Lösung ausfallen, sondern löslich bleiben. Sollte aber im Falle einer hochreaktiven Verbindung der Komplexierungsgrad gering und die Konzentration hoch sein, so kann es sich empfehlen, das Wasser in kleinen Portionen zuzugeben. In diesen Fällen kann es auch von Vorteil sein, das Wasser mit Hilfe von wasserhaltigen organischen oder anorganischen Systemen in das Reaktionssystem einzutragen. Als besonders geeignet hat sich in vielen Fällen die Eintragung der Wassermengen mit Hilfe von feuchtigkeitsbeladenen Adsorbentien, z.B. Molekularsieben, oder wasserhaltigen organischen Lösungsmitteln, z.B. 80%igem Ethanol erwiesen. Die Wasserzugabe kann auch über eine Reaktion erfolgen, bei der Wasser gebildet wird, z.B. bei der Esterbildung aus Säure und Alkohol (CCC = Chemically Controlled Condensation).

Um die sich an die Hydrolyse in der Regel anschließende Kondensation zu beschleunigen, ist es meist von Vorteil, die Temperatur zu erhöhen und/oder die Hydrolyse in Gegenwart eines Kondensationskatalysators durchzuführen. Als Kondensationskatalysatoren eignen sich Protonen oder Hydroxylionen abspaltende Verbindungen und Amine bzw. Aminoderivate. Spezielle Beispiele sind organische oder anorganische Säuren, wie z.B. Salzsäure, Salpetersäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine. Flüchtige Säuren und Basen, insbesondere Salzsäure, Salpetersäure, Ammoniak und Triethylamin, sind besonders bevorzugt. Wenn bei der Hydrolyse selbst eine als Katalysator wirkende Verbindung entsteht (z.B. Salzsäure bei der Hydrolyse von Aluminiumchloriden) erübrigt sich in der Regel die getrennte Zugabe eines Kondensationskatalysators. Selbstverständlich sollte der Kondensationskatalysator so beschaffen sein, daß er entweder leicht und vorzugsweise rückstandsfrei aus dem Reaktionsgemisch entfernbar ist oder aber seine Anwesenheit die weiteren Reaktionsschritte nicht behindert.

Durch das gewählte Verhältnis von Verbindungen der Formel (I) zu Verbindungen A einerseits und zu Wasser andererseits kann erfindungsgemäß die räumliche Struktur der anorganischen Spezies festgelegt werden, die später in der organischen Matrix eingebettet werden soll. Dies soll am Beispiel einer Verbindung $MR_4$, wobei sich alle vier Reste R durch Komplexbildner und Wasser verdrängen lassen, und einer Verbindung A, die über eine funktionelle Gruppe X verfügt, veranschaulicht werden.

Setzt man die obigen Ausgangsverbindungen im äquimolaren Verhältnis (1:1) ein, und gibt dann soviel Wasser zu, daß alle an M verbliebenen Reste R durch Hydroxygruppen ersetzt werden, die dann einer Kondensation unterliegen, ergibt sich folgendes Bild:

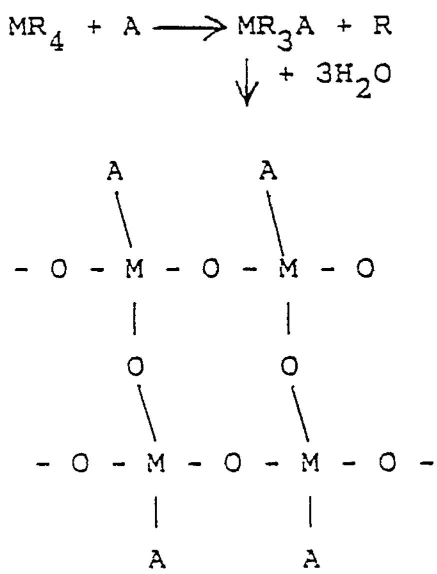

Es entsteht also ein dreidimensionales Netzwerk aus über Sauerstoffatome verbundenen Zentralatomen M, von denen jedes einen Komplexliganden A trägt.

Setzt man die Ausgangsverbindungen im Verhältnis 1:2 ein, so resultiert daraus nach der Hydrolyse und Kondensation eine lineare Kette aus durch Sauerstoffatome verbrückten Zentralatomen M, die jeweils zwei Komplexliganden A tragen:

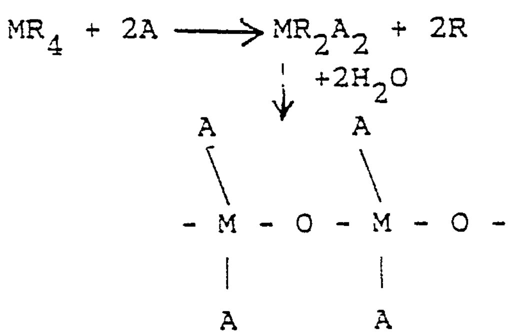

Mit diesem Verhältnis (1:2) lassen sich also extrem kleine Metalloxid-Fasern herstellen, die später über die funktionellen Gruppen Y der Verbindungen A fest in der organischen Matrix verankert werden können.

Erniedrigt man das Verhältnis $MR_4$ zu A noch weiter, gelangt man zu entsprechend kürzeren Ketten, bis schließlich bei einem Verhältnis von 1:4 eine vollständige Komplexierung von M vorliegt, die eine Hydrolyse und Kondensation verhindert.

Im Falle von Aluminiumverbindungen der allgemeinen Formel (II) wird das Verhältnis Aluminiumverbindung zu Verbindung A (mit einer funktionellen Gruppe X) erfindungsgemäß vorzugsweise im Bereich von 1:0,5 bis 1:3, insbesondere 1:0,5 bis 1:1 gewählt. In diesen Fällen führt die Zugabe einer stöchiometrischen Wassermenge in der Regel zu klaren Lösungen (Solen).

Entsprechend wird im Falle von Titan- und Zirkoniumverbindungen der allgemeinen Formel (III) das molare Verhältnis zur Verbindung A vorzugsweise von 1:0,5 bis 1:2 gewählt.

Nach der Komplexbildung und vorzugsweise nach der teilweisen Hydrolyse und Kondensation der Komplexe wird erfindungsgemäß eine Polymerisation oder Polykondensation unter Einbeziehung der in den Verbindungen A vorhandenen funktionellen Gruppen Y eingeleitet. Diese Reaktionen können entweder unter ausschließlicher Beteiligung der funktionellen Gruppen Y durchgeführt werden, oder man gibt eine oder mehrere Verbindungen zur Lösung der hydrolytisch kondensierten Komplexverbindung, die zusammen mit den funktionellen Gruppen Y polymerisiert bzw. polykondensiert werden können. Die letzte Vorgehensweise empfiehlt sich insbesondere dann, wenn die funktionellen Gruppen Y alleine überhaupt nicht zur Polymerisation bzw. Polykondensation befähigt sind (z.B. wenn es sich um Gruppen eines Typs handelt, die nur mit Gruppen eines anderen Typs eine Reaktion eingehen können, z.B. eine Esterbildung) oder wenn die Gruppen Y dazu nur im beschränkten Maße fähig sind (so ist es z.B. bekannt, daß Allylverbindungen miteinander nur schwierig zu polymerisieren sind und aus Monomeren mit Allylgruppen in der Regel nur Oligomere mit bis zu 50 Monomereinheiten gebildet werden).

Als Copolymere bzw. cokondensierbare Verbindungen kommen prinzipiell alle für diesen Zweck bekannten Verbindungen in Frage, so lange sich sich im verwendeten Lösungsmittel zufriedenstellend lösen und mit der jeweils vorhandenen Gruppe Y eine entsprechende Reaktion eingehen können. Als Copolymere für die erfindungsgemäß bevorzugte radikalische Polymerisation eignen sich z.B. Styrol und Styrolderivate, Alkene (Ethylen, Propylen, Buten, Isobuten), halogenierte Alkene (Tetrafluorethylen, Chlortrifluorethylen, Vinylchlorid, Vinylfluorid, Vinylidenfluorid, Vinylidenchlorid), Vinylacetat, Vinylpyrrolidon, Vinylcarbazol, (Meth)-acrylsäure und deren Derivate (insbesondere (Meth)acrylnitril und (Meth)acrylsäureester) sowie Gemische derartiger Monomerer. Auch mehrfach ungesättigte Verbindungen können erfindungsgemäß verwendet werden.

Eine Copolymerisation kann auch mit Verbindungen durchgeführt werden, die nicht ausschließlich organischer Natur sind, sondern z.B. auch Silylgruppen tragen. Ein Beispiel hierfür ist 3-(Trimethoxysilyl)-propylmethacrylat (MEMO).

Die Polymerisation bzw. Polykondensation im erfindungsgemäßen Verfahren wird nach den dafür allgemein bekannten Methoden durchgeführt. Im

Falle der radikalischen Polymerisation gibt man z.B. zu der die polymerisierbaren Komponenten enthaltenden Lösung einen üblichen Polymerisationkatalysator, z.B. Benzoylperoxid oder Azobisisobutyronitril, und erhöht darauf die Temperatur der Lösung so lange, bis der Katalysator unter Bildung von Radikalen zerfällt. Im Falle der soeben genannten Katalysatoren liegt die Temperatur bei ungefähr 80 bis 100 °C. Die Eigenschaften der organischen Matrix können in gewissem Rahmen z.B. durch Art und Menge des Katalysators, Polymerisationstemperatur, Dauer der Polymerisation etc. variiert werden. Es kann aber z.B. auch eine UV-Härtung durchgeführt werden. Für diesen Zweck geeignete UV-Starter sind bekannt und im Handel erhältlich (z.B. Dorocur® 2273 bzw. 1173 bzw. 1116 der Firma Merck oder Irgacure® 184 bzw. 651 der Firma Ciba-Geigy).

Gemäß einer bevorzugten Ausführungsform liefert das erfindungsgemäße Verfahren eine organische Polymermatrix, in der ein anorganisches Polykondensatgerüst fest verankert ist und dadurch die Matrix in hohem Maße verstärkt. Demgemäß eignet sich das erfindungsgemäße Verfahren insbesondere für die Herstellung von Monofaser-verstärkten Kunststoffen, organischen Fasern mit anorganischer Verstärkung, homogenen anorganisch-organischen Copolymerisaten, aber auch für Monolithe mit organischem Stützgerüst und poröse Keramiken mit definierten Poren. Weiterhin ist es mit dem erfindungsgemäßen Verfahren auch in vorteilhafter Weise möglich, Beschichtungen mit einer Schichtdicke von ≧1 µm herzustellen, wie dies im nachfolgenden Beispiel 6 noch näher erläutert wird. Hierfür eignet sich eine UV-Härtung besonders gut.

Die Vorteile des erfindungsgemäßen Verfahrens liegen unter anderem darin, daß man, bedingt durch die vorangegangene Komplexbildung, in organischen Lösungsmitteln lösliche Hydroxide erhalten kann, was die Bildung von homogenen Produkten sehr erleichtert, und daß man die Funktionalität des Hydroxids und damit auch die Struktur des daraus resultierenden Kondensats auf molekularer Ebene über die Menge des zugegebenen Komplexbildners festlegen kann.

Die folgenden Beispiele veranschaulichen die vorliegende Erfindung.

## Beispiel 1

20,64 g (84 mMol) Al(O-sek.-Bu)$_3$ wurden in 75 ml Isopropanol gelöst und mit 10,90 g (84 mMol) Acetessigsäureethylester umgesetzt. Die Hydrolyse erfolgte mit 3,02 g (168 mMol) Wasser in 20 ml Isopropanol. Es wurden klare Sole erhalten, deren Primärpartikelgröße um 5 nm lag (bestimmt durch dynamische Lichtstreuung). Die Entfernung des Lösungsmittels im Wasserstrahlvakuum führte zu farblosen Gelpulvern, die nach Trocknung bei 100 °C (2 bis 4 Stunden) rückstandsfrei in Toluol und einer Isopropanol-Toluol-Mischung (1:1) löslich waren.

Analoge Ergebnisse wurden erhalten, wenn die eingesetzte Menge an Acetessigsäureethylester auf 5,45 g (42 mMol) herabgesetzt wurde. Die Partikelgröße lag in diesem Fall zwischen 8 und 10 nm.

Der obige Versuch wurde mit Acetessigsäureallylester wiederholt und es wurden ähnliche Ergebnisse erhalten.

Das Vorliegen komplexierter Aluminiumhydroxide wurde anhand der IR-Spektren nachgewiesen. Auch die C,H-Elementaranalyse bestätigte die Zusammensetzung des komplexierten Aluminiumhydroxids. Danach war der Komplexbildner auch nach Trocknung bei 100 °C noch quantitativ vorhanden.

Die Kondensation der obigen Aluminiumhydroxide kann eingeleitet werden durch saure Katalyse oder Temperaturerhöhung.

## Beispiel 2

5,03 g Al(O-sek.-Bu)$_3$ wurden in 5 ml Toluol gelöst und mit 2,90 g Acetessigsäureallylester versetzt (Molverhältnis 1:1). Die Hydrolyse erfolgte unter Zugabe von 0,74 g $H_2O$ in 5 ml sek.-Butanol. Nach Zugabe von 100 mg Benzoylperoxid wurde für 1 Stunde auf 100 °C erwärmt, wobei die Viskosität zunahm.

Nach diesem Verfahren wurden keine hochpolymeren Verbindungen erhalten, da Allylgruppen sich nur schwierig miteinander polymerisieren lassen.

## Beispiel 3

5,35 g Al(O-sek.-Bu)$_3$ wurden in 20 ml Toluol gelöst und mit 3,09 g Acetessigsäureallylester zur Reaktion gebracht. Die Hydrolyse erfolgte mit 0,72 g $H_2O$ in 5 ml sek.-Butanol. Nach der Wasserzugabe wurde eine halbe Stunde bei Raumtemperatur gerührt. Zu dem resultierenden Hydrolysat wurden 5 g Styrol und 0,1 g Benzoylperoxid gegeben. Durch einstündiges Erwärmen auf 80 bis 100 °C erfolgte die Polymerisation, die durch ein erheblichen Viskositätsanstieg angezeigt wurde. Nach der Trocknung erhielt man farblose Copolymerisate, die bei der DSC-Untersuchung (Differential Scanning Calorimetry) keine Glasübergangstemperatur für Polystyrol zeigten. Stattdessen erfolgte oberhalb 250 °C ein kontinuierlicher Abbau der organischen Matrix.

### Beispiel 4

10,17 g Al(O-sek.-Bu)$_3$ wurden in 70 ml Toluol/Isopropanol (1:1) gelöst und mit 3,62 ml Methacrylsäure (Molverhältnis Al zu Methacrylsäure = 1:1) versetzt. Nach dreißigminütigem Rühren wurden 50 mg Benzoylperoxid zugegeben und das Reaktionsgemisch wurde bei 80 °C erwärmt. Nach ca. 10 Minuten wurde eine hochviskose klare Masse erhalten, aus der Fäden gezogen werden konnten. Längere Reaktionszeiten führten zu festeren Produkten, ähnlich den organischen Polyacrylaten.

Nach diesem Verfahren wurden auch Copolymerisate von Al-Methacrylat und Zr-Methacrylat erhalten.

### Beispiel 5

Zu 10,25 g Al(O-sek.-Bu)$_3$ in 50 ml Toluol/Isopropanol (1:1) wurden 3,53 ml Methacrylsäure gegeben, worauf die resultierende Mischung 30 Minuten bei Raumtemperatur gerührt wurde. Nach der Zugabe von 9,94 ml 3-(Trismethoxysilyl)-propylmethacrylat (MEMO) und 50 mg Benzoylperoxid wurde auf 80 °C erwärmt. Nach 30 Minuten erhielt man ein viskoses Sol, dessen Viskosität durch Einengen erhöht werden konnte und aus dem per Hand Fäden gezogen werden konnten. Das Trocknen dieser Fäden bzw. des Gelpulvers bei 120 bis 140 °C führte zu klaren, hydrolysebeständigen Produkten.

Dieser Versuch wurde mit den folgenden weiteren molaren Verhältnissen von Aluminium zu Methacrylsäure zu MEMO durchgeführt: 1:1:1, 1:1:2 und 1:1:3. Dabei wurden im wesentlichen dieselben Ergebnisse erhalten. Auch der Austausch von Al(O-sek.-Bu)$_3$ durch Zr(O-i-Pr)$_4$ in dem obigen Versuch führte zu keinen nennenswerten Veränderungen im Ergebnis.

### Beispiel 6

Herstellung einer Beschichtungslösung

10 g Zr(O-i-Pr)$_4$ wurden in 50 ml Toluol/Isopropanol (1:1) gelöst, mit 2,6 ml Methacrylsäure versetzt und mit 1,6 ml $H_2O$ in 5 ml Isopropanol hydrolysiert. Die erhaltene klare Lösung wurde 30 Minuten gerührt, anschließend mit 5,4 ml MEMO versetzt und erneut 60 Minuten bei Raumtemperatur gerührt. Nach Zugabe eines UV-Starters (50 mg Irgacure184) wurden Objektträger beschichtet und UV-gehärtet. Nach diesem Verfahren wurden transparente Schichten mit Schichtdikken >1 µm erhalten. Rißbildung trat nicht auf.

## Ansprüche

1. Verfahren zur Fixierung einer anorganischen Spezies in einer organischen Matrix, dadurch **gekennzeichnet,** daß man mindestens eine Verbindung der Summenformel (I)

$MR_n$ (I)

in welcher M ausgewählt ist aus Nebengruppenmetallen, Lanthaniden, Actiniden, Al, Sn, B und Si; sich wenigstens ein Teil der Reste R, die gleich oder verschieden sein können, durch einen Komplexbildner verdrängen läßt; und n der Quotient aus der Wertigkeit von M und der durchschnittlichen Wertigkeit der Reste R ist;
gegebenenfalls in teilweise hydrolysierter bzw. vorkondensierter Form mit mindestens einer organischen Verbindung A in Kontakt bringt, die über mindestens eine zur Komplexbildung mit M fähige funktionelle Gruppe X, die wenigstens einen Teil der Reste R verdrängen kann, verfügt und zusätzlich mindestens eine funktionelle Gruppe Y, die an einer Polymerisations- oder Polykondensationsreaktion teilnehmen kann, aufweist, und man nach erfolgter Komplexbildung eine Polymerisation oder Polykondensation unter Beteiligung der funktionellen Gruppe(n) Y der Verbindung A durchführt.

2. Verfahren nach Anspruch 1, dadurch gekennzeichnet, daß man die Verbindung(en) der Formel (I) und die Verbindung(en) A in einem solchen molaren Verhältnis einsetzt, daß die Zahl der theoretisch verdrängbaren Reste R größer ist als die Zahl der durch die Gruppe(n) X theoretisch ersetzbaren Reste.

3. Verfahren nach Anspruch 2, dadurch gekennzeichnet, daß es sich bei den nach erfolgter Komplexbildung an M verbliebenen Resten R zumindest teilweise um Reste R* handelt, die mittels Umsetzung mit Wasser durch OH-Gruppen ersetzbar sind.

4. Verfahren nach Anspruch 3, dadurch gekennzeichnet, daß nach erfolgter Komplexbildung und vor Einleitung der Polymerisation bzw. Polykondensation zur Bildung der organischen Matrix Wasser in solchen Mengen und unter solchen Bedingungen zugegeben wird, daß wenigstens ein Teil der Reste R* primär durch OH-Gruppen ersetzt wird.

5. Verfahren nach einem der vorangehenden Ansprüche, dadurch gekennzeichnet, daß zur Bildung der organischen Matrix eine Polymerisation, vorzugsweise eine radikalische Polymerisation durchgeführt wird.

6. Verfahren nach Anspruch 5, dadurch gekennzeichnet, daß bei der Polymerisation auch mindestens eine vom Komplexbildner verschiedene organische polymerisierbare Verbindung, vorzugsweise Styrol oder Acrylnitril, eingesetzt wird.

7. Verfahren nach einem der vorangehenden Ansprüche, dadurch gekennzeichnet, daß M ausgewählt wird aus einem oder mehreren Elementen der Gruppe Al, V, Ti, Zr, Hf, Sn, U, B und Si, insbesondere Al, Ti und Zr.

8. Verfahren nach Anspruch 7, dadurch gekennzeichnet, daß mindestens eine Verbindung der Formel (I) eine solche der Formel (II)

$AlR'_3$ (II)

ist, worin die Reste $R'$, die gleich oder verschieden sein können, Halogen, insbesondere Chlor und Brom, Alkoxy mit 1 bis 8, vorzugsweise 1 bis 4 Kohlenstoffatomen und Alkyl mit 1 bis 8, vorzugsweise 1 bis 4 Kohlenstoffatomen bedeuten.

9. Verfahren nach Anspruch 7, dadurch gekennzeichnet daß mindestens eine Verbindung der Formel (I) eine solche der Formel (III)

$M'R''_4$ (III)

ist, worin $M'$ für Ti oder Zr steht und die Reste $R''$, die gleich oder verschieden sein können, Halogen, insbesondere Chlor und Brom, und Alkoxy mit 1 bis 8, vorzugsweise 1 bis 4 Kohlenstoffatomen, bedeuten.

10. Verfahren nach einem der vorangehenden Ansprüche, dadurch gekennzeichnet, daß die Verbindung A als funktionelle Gruppe X eine Carboxylgruppe oder die Struktureinheit $-CO-CH_2-CO-$ aufweist.

11. Verfahren nach einem der vorangehenden Ansprüche, dadurch gekennzeichnet, daß die Verbindung A als funktionelle Gruppe Y eine ethylenisch ungesättigte Gruppierung, insbesondere eine Gruppe $CH_2=CZ-$, wobei Z für H oder $CH_3$ steht, aufweist.

12. Verfahren nach einem der vorangehenden Ansprüche, dadurch gekennzeichnet, daß die Verbindung A ausgewählt wird aus Acrylsäure, Methacrylsäure, Acetessigsäureallylester und Acetessigsäurevinylester.

13. Verfahren nach einem der vorangehenden Ansprüche, dadurch gekennzeichnet, daß man als Polymerisationskatalysator Benzoylperoxid oder Azobisisobutyronitril oder einen UV-Starter verwendet.

14. Verfahren nach einem der Ansprüche 4 bis 13, dadurch gekennzeichnet, daß man das Verhältnis von Verbindung(en) der Formel (I) zu Verbindung(en) A so wählt, daß nach der Komplexbildung an jedem Atom M zwei Reste $R^*$ zurückbleiben, die dann durch Umsetzung mit Wasser entfernt werden.

15. Organische Matrix mit darin fixierten anorganischen Spezies, erhältlich nach dem Verfahren gemäß einem der Ansprüche 1 bis 14.